**Europäisches Patentamt**

**European Patent Office**

**Office européen des brevets**

(11) Veröffentlichungsnummer: **0 120 979**

**B1**

# EUROPÄISCHE PATENTSCHRIFT

(45) Veröffentlichungstag der Patentschrift:
26.11.86

(21) Anmeldenummer: 83103156.2

(22) Anmeldetag: 30.03.83

(51) Int. Cl.⁴: **B 65 G 1/04, E 01 B 25/12**

(54) Schienengebundenes Fördersystem.

(43) Veröffentlichungstag der Anmeldung:
**10.10.84 Patentblatt 84/41**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**BE-A-541 346**
**DE-A-2 100 854**
**DE-A-2 313 429**
**US-A-3 451 351**

(73) Patentinhaber: **Köttgen GmbH & Co. KG,
Paffratherstrasse 79- 131, D-5070 Bergisch
Gladbach (DE)**

(72) Erfinder: **Gronau, Paul, Dipl.- Ing., Wilhelmsaue 31,
D-1000 Berlin 31 (DE)**
Erfinder: **Gronau, Jürgen, Ing., Sander Strasse 112,
D-5060 Bergisch Gladbach 2 (DE)**

(74) Vertreter: **Selting, Günther, Dipl.- Ing.,
Deichmannhaus am Hauptbahnhof, D-5000 Köln 1
(DE)**

EP 0 120 979 B1

## Beschreibung

Die Erfindung betrifft ein schienengebundenes Fördersystem nach dem Oberbegriff des Patentanspruchs 1.

Bekannt ist ein derartiges schienengebundenes Fördersystem (DE-C-21 00 854), bei dem die Fahrzeuge sich zwischen einer Bodenschiene und einer Oberschiene erstrecken. Das Laufrad bzw. die Laufräder eines Fahrzeugs sind in der U-förmigen Bodenschiene geführt. In Fahrtrichtung vor den Laufrädern sind seitliche Führungsrollen angebracht, die an Verzweigungen oder Weichen des Schienensystems einzeln in entsprechende Führungsschienen abgesenkt werden können, welche seitlich neben den Hauptschienen entlanglaufen. Ähnliche Leitrollen sind an dem Oberschienensystem vorgesehen. Die Leitrollen am Bodenschienensystem und am Oberschienensystem werden synchron gesteuert, so daß der untere Führungsweg und der obere Führungsweg des Fahrzeugs nicht auseinanderklaffen. Dieses Einschienen-Fördersystem (d.h. mit nur einer einzigen Bodenschiene) dient als Regalfördersystem in Regallagern. Die Fahrzeuge können in die Gängen zwischen Regalen in einem Lager gefahren werden. Sie haben ein Hubgerüst, an welchem eine vertikal bewegbare Plattform geführt ist, um Lasten auf die Höhe der benötigten Regalfächer anzuheben. Nachteilig ist auch bei diesem bekannten System, daß bei Abzweigungen oder Weichen die Laufräder über eine erhebliche Distanz keine hinreichend exakte seitliche Führung haben, weil die Flansche der U-förmigen Bodenschiene in diesem Bereich divergieren.

Bei einem aus DE-A-2 313 429 bekannten schienengebundenen Fördersytem kann das Fahrzeug ausschließlich entlang eines geraden Weges in einem Regalgang fahren. Weder die unteren noch die oberen Laufwerke des Fahrzeugs sind um eine vertikale Achse schwenkbar an dem Rahmen angebracht. Die Laufräder sind an festen Lageranordnungen gelagert. Seitlich neben den Laufrädern sind Führungsrollen vorgesehen, die seitlich an der rechteckigen Bodenschiene angreifen und ausschließlich eine Führungsfunktion haben, d.h. die Führungsrollen verhindern, daß die zylindrischen Laufräder von der flachen Bodenschiene abweichen.

Aus BE-A-541 346 ist ein Hängeförderer mit runden Schienen bekannt, auf denen eine Aufhängevorrichtung mit einer Rolle bewegbar ist. Die Rolle hat zu ihrer seitlichen Führung Flansche. An Verzweigungsstellen sind die hängend befestigten runden Schienen durch Schlitze unterbrochen, wobei einer der Schlitze sich über die gesamte Schienenhöhe erstreckt und eine Breite haben muß, die so groß ist, daß die die Last tragende Aufhängevorrichtung diesen Schlitz passieren kann.

Schließlich ist aus US-A-3 451 351 ein Fahrzeugsystem bekannt, das seitliche Leitrollen aufweist, die einzeln vertikal bewegbar sind, um an einer Weiche oder Abzweigung die Fahrtrichtung zu bestimmen, jedoch hat dieses System den Nachteil, daß bei einer Abzweigung die Laufräder über längere Zeit völlig ungeführt sind. Die Leitrollen müssen über einen langen Bereich hinweg die Führung des Laufwerks übernehmen. Dies führt dazu, daß das Schienensystem sehr komplex wird, daß die Fahrt im weichen Bereich instabil wird und daß ein starker Verschleiß an den Leitrollen eintritt.

Der Erfindung liegt die Aufgabe zugrunde, ein schienengebundenes Fördersystem der eingangs genannten Art zu schaffen, das bei Verzweigungen des Schienenweges eine exakte Führung der Laufräder ermöglicht und bei dem die Unterbrechung des Schienenprofils auf ein minimales Maß reduziert ist.

Zur Lösung dieser Aufgabe ist erfindungsgemäß vorgesehen, daß die Bodenschiene ein Kopfprofil aufweist, an welchem seitliche Flansche des Laufrades angreifen, daß an Abzweigungen und Weichen in den divergierenden Strängen der Bodenschiene im Kopfprofil Schlitze vorgesehen sind, deren Weite bzw. Tiefe annähernd der Breite bzw. Höhe der Flansche entspricht, und daß die Leitrollen auf jeder Seite des Laufrades vertikal bewegbar sind, während beide Flansche des Laufrades ständig mit der Seitenfläche des Kopfprofils zusammenwirken.

Bei dem erfindungsgemäßen Fördersystem haben die Laufräder zu beiden Seiten seitliche Flansche. Die radiale Erstreckung dieser Flansche ist aber geringer als die Höhe des Kopfprofils der Schiene. An einer Y-förmigen Verzweigung sind demnach vorzugsweise nur zwei schmale Schlitze im Kopfprofil erforderlich, wobei der eine Schlitz schräg innerhalb des Hauptstranges verläuft und der andere Schlitz parallel zum Hauptstrang an derjenigen Stelle verläuft, an der der Abzweigstrang in den Hauptstrang übergeht. Damit ist gewährleistet, daß das Laufrad mit seiner zylindrischen Lauffläche stets voll auf der Oberseite des Kopfprofils der Schiene aufliegt und das andererseits beiden Flansche des Laufrades ständig mit der Seitenfläche des Kopfprofiles zusammenwirken. Da nur sehr schmale Schlitze erforderlich sind, werden beim Überfahren von Verzweigungsstellen keine Stöße auf das Fahrzeug ausgeübt. Abstützung und Führung des Fahrzeugs an der Bodenschiene sind glatt und stoßfrei. In jeder Phase der Fahrt wirken beiden Flansche des Laufrades mit den Seiten des Kopfprofiles zusammen, ohne daß die seitliche Führung des Laufrades unterbrochen würde.

Vorzugsweise haben die Flansche und Schlitze eine sich nach außen verringerte Breite. Dies bedeutet, daß die Innenflanken der Flansche schräg stehen, um sich unter einem Winkel von z.B. 45° an die schrägen Seitenwände im oberen Bereich des Kopfprofils der Schiene anlegen zu können. Hierdurch wird eine exakte und nahezu spielfreie Führung des Laufrades auf der Schiene mit guter Spurtreue erreicht. Obwohl die Außenflanken der Flansche vertikal sein können, sind gemäß einer bevorzugten Ausführungsform die Flansche - und ebenso die Schlitze in den Schienen - V-förmig. Eine V-förmige Schlitzkontur mit zwei schrägen Flanken ist einfacher in das Kopfprofil der Schiene einzuarbeiten als eine Schlitzkontur mit einer senkrechten Flanke.

Ebenso wie bei anderen Schienensystemen ist auch bei dem erfindungsgemäßen Fördersystem die Verringerung der Lärmerzeugung von Bedeutung. Gemäß einer bevorzugten Ausführungsform der Erfindung weist das Laufrad zwischen einem Kern und einem äußeren Mantel eine Dämpfungsschicht auf. Alle Teile des Laufrades, die mit der Schiene in direkte Berührung kommen, also die Lauffläche und die Flansche, befinden sich an dem Mantel, während der innere Kern über die Radachse mit dem Fahrzeugkörper verbunden ist. Die elastische Dämpfungsschicht dämpft die Übertragung des Körperschalls von dem Mantel über den Kern auf den Fahrzeugkörper.

Im folgenden wird unter Bezugnahme auf die Zeichnungen ein Ausführungsbeispiel der Erfindung näher erläutert.

Es zeigen:

Fig. 1 eine Seitenansicht eines Fahrzeugs in Form eines Regalförderzeugs,

Fig. 2 eine Frontansicht des Fahrzeugs nach Fig. 1,

Fig. 3 eine vergrößerte Darstellung der Einzelheit III in Fig. 2,

Fig. 4 eine vergrößerte Darstellung der Einzelheit IV in Fig. 2,

Fig. 5 eine vergrößerte Darstellung der Einzelheit V in Fig. 1,

Fig. 6 eine vergrößerte Darstellung der Einzelheit VI in Fig. 1,

Fig. 7 einen Querschnitt durch ein Laufrad,

Fig. 8 eine Draufsicht auf ein Laufwerk,

Fig. 9 eine perspektivische Darstellung der Bodenschiene an einer Abzweigung und

Fig. 10 eine Darstellung des Laufrades beim Hineinfahren in den abzweigenden Strang nach Fig. 9.

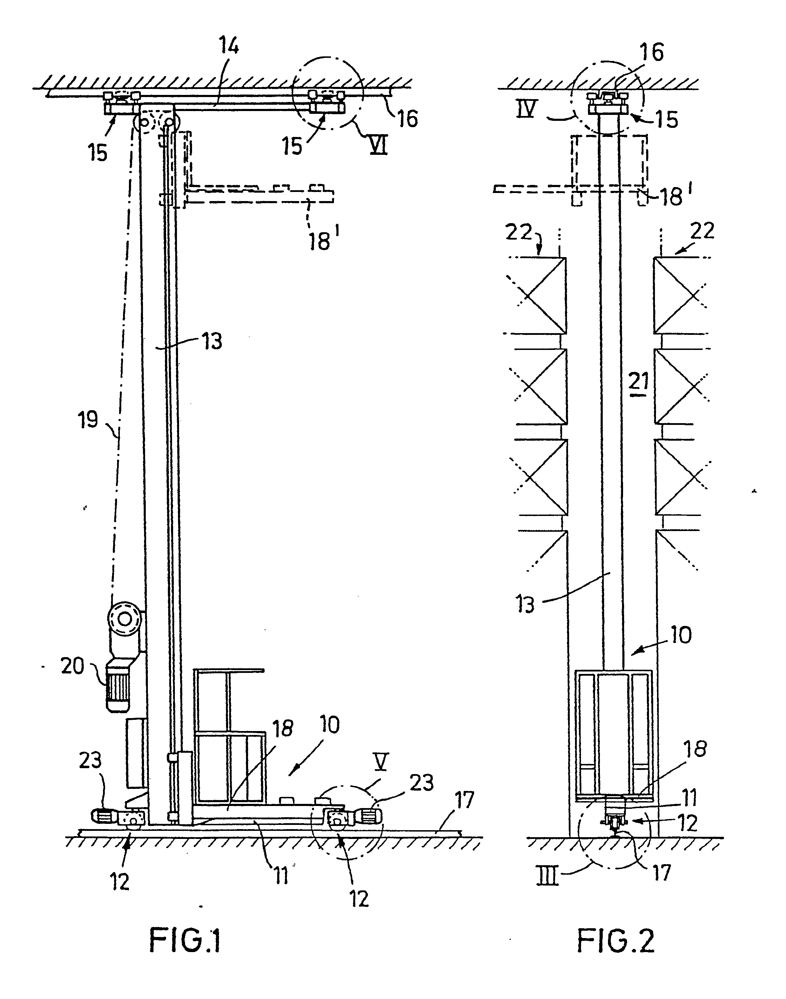

Das dargestellte Fahrzeug 10 bzw Regalförderzeug weist einen Rahmen 11 auf, der an jedem seiner beiden Enden mit einem Laufwerk 12 versehen ist. Von dem Rahmen 11 erstreckt sich ein Hubgerüst 13 vertikal nach oben. Am oberen Ende des Hubgerüsts 13 befindet sich der obere Rahmen 14, der sich in Längsrichtung des Fahrzeugs erstreckt und an seinem vorderen und an seinem rückwertigen Ende je ein Laufwerk 15 aufweist. Die oberen Laufwerke 15 fahren entlang einer Oberschiene 16, die an der Decke des Raumes befestigt ist, und die unteren Laufwerke 12 fahren auf einer Bodenschiene 17, die auf oder in dem Boden verlegt ist. An dem Hubgerüst 13 ist eine vertikal bewegbare Plattform 18 geführt. Die Plattform 18 dient zur Aufnahme von Lasten und kann über einen Seilzug 19 von einem Elektromotor 20 zwischen der in den Fign. 1 und 2 in durchgezogenen Linien dargestellten unteren Position und der gestrichelt dargestellten maximalen Hubposition bewegt werden. In Fig. 2 ist zur Verdeutlichung dargestellt, wie das Fahrzeug 10 in einem schmalen Regalgang 21 zwischen zwei Hochregalen 22 gefahren wird, um Lasten in Regalfächer unterschiedlicher Höhe eingeben oder Lasten aus diesen Regalfächern entnehmen zu können.

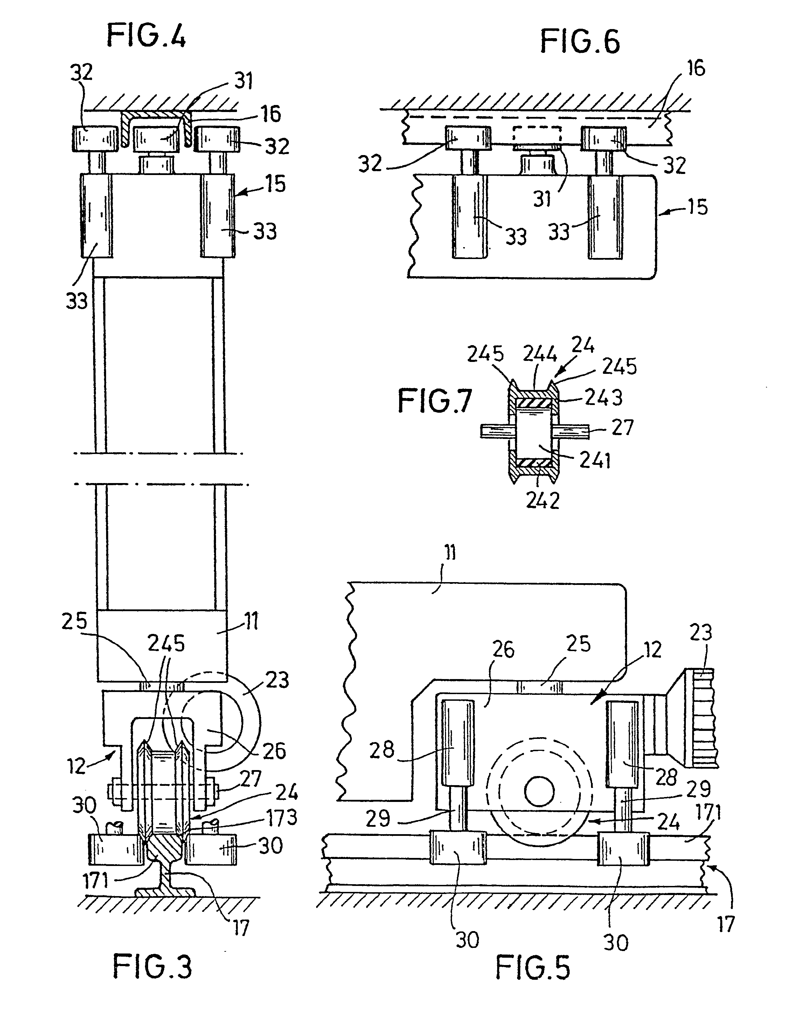

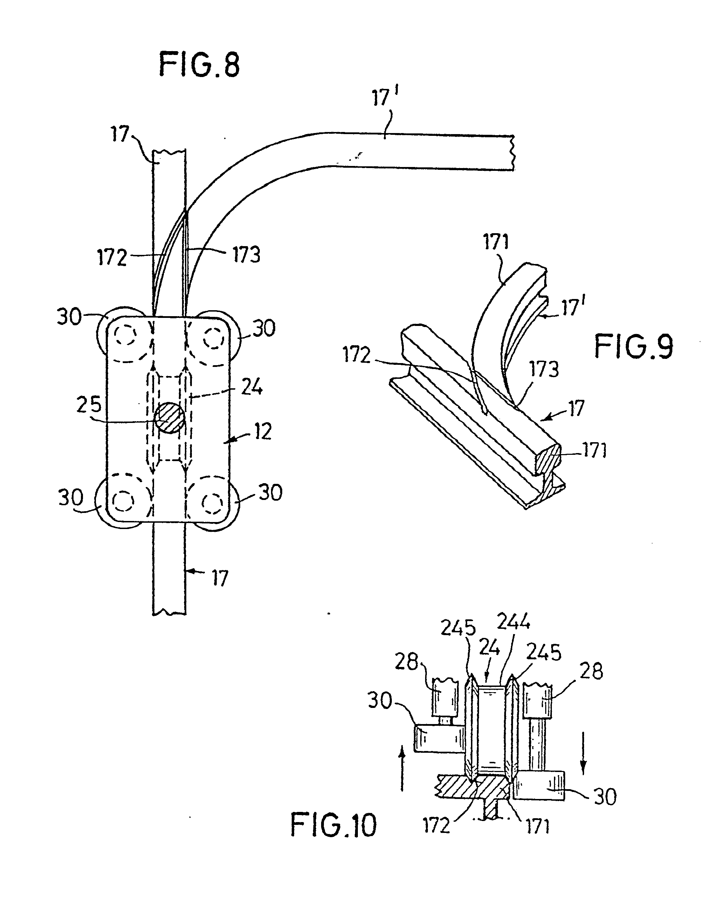

Der Antrieb des Fahrzeugs 10 erfolgt über die noch zu erläuternden Laufräder der unteren Laufwerke 12 durch Elektromotore 23. Die Konstruktion der unteren Laufwerke 12 ist aus den Fign. 3 und 5 erkennbar. Jedes dieser Laufwerke 12 ist über eine vertikale Achse 25, die sich von dem Rahmen 11 nach unten erstreckt, an dem Rahmen 11 befestigt. Zwischen den nach unten ragenden Schenkeln eines U-förmigen Halters 26 ist das Laufrad 24 mit horizontaler Achse 27 gelagert. An den Außenseiten der Schenkel des Halters 26 sind Verstelleinrichtungen 28 befestigt, von denen jeweils zwei Verstelleinrichtungen 88 auf einer Seite des Halters 26 angeordnet sind. Jede Verstelleinrichtung 28 weist eine nach unten ragende Stange 29 auf, an der eine Leitrolle 30 drehbar gelagert ist. Die Verstelleinrichtungen 28 enthalten beispielsweise einen Elektromagneten, der im erregten Zustand die betreffende Stange 29 anhebt. Im aberregten Zustand des Elektromagneten befindet sich die Leitrolle 30 in gleicher Höhe mit dem Kopfprofil 171 der Schiene 17. Wird die Verstelleinrichtung 28 erregt, dann wird die betreffende Leitrolle 30 auf ein Niveau oberhalb des Kopfprofiles 171 hochgezogen, wie dies bei der linken Leitrolle 30 in Fig. 10 dargestellt ist. Die Leitrollen 30 sind in Längsrichtung des Fahrzeugs gegenüber dem Laufrad 24 versetzt angeordnet. Jeweils zwei Leitrollen 30 sind vor dem Laufrad 24 und die beiden anderen Leitrollen hinter dem Laufrad 24 angeordnet (Fig. 8). Die in Fahrtrichtung vor dem Laufrad 24 angeordneten Führungsrollen 30 werden, wenn sie im abgesenkten Zustand sind, von den Seitenflächen des Kopfprofiles 171 der Schiene 17 geführt, so daß die Drehung des Laufwerkes 12 um die Drehachse 25 herum durch die seitlich an dem Kopfprofil 171 angreifenden Leitrollen 30 verursacht wird, wodurch erreicht wird, daß sich das Laufwerk stets selbsttätig auf den Verlauf der Schiene 17 einstellt.

Die oberen Laufwerke 15, die in den Fign. 4 und 6 dargestellt sind, weisen jeweils ein in das Innere der U-förmigen Schiene 16 eingreifendes Laufrad 31 auf, das um eine vertikale Achse drehbar ist und von den Schenkeln der Schiene 16 seitlich geführt wird, sowie insgesamt vier Leitrollen 32, die in gleicher Weise an dem Laufwerk 15 angeordnet sind, wie die Leitrollen 30 an den unteren Laufwerken 12.

Die Leitrollen 32 befinden sich im angehobenen Zustand in Höhe der Schenkel der Schiene 16, an deren Außenseiten sie angreifen können. Jede der Leitrollen 32 ist von einer Verstelleinrichtung 33 vertikal bewegbar. Wird die Verstelleinrichtung 33 erregt, dann wird die betreffende Leitrolle 32 abgesenkt, so daß sie mit der Schiene 16 außer Eingriff ist. Jedes obere Laufrad 31 befindet sich genau mittig über einem unteren Laufrad 24 und jeweils zwei Leitrollen 30 und 32 sind entlang einer gemeinsamen vertikalen Achse angeordnet. Die Steuerung der Verstelleinrichtungen 28 und 33 dieser zwei entlang einer gemeinsamen vertikalen Achse angeordneten Laufrollen 30 und 32 erfolgt synchron, so daß das obere Laufwerk entlang der Oberschiene 16 den gleichen Weg durchfährt wie das untere Leitwerk 12 an der Bodenschiene 17.

In Fig. 7 ist eine der unteren Laufrollen 24 im Schnitt dargestellt. Die Laufrolle weist einen zylindrischen Kern 241 auf, der an seinem Umfang mit einer Dämpfungsschicht 242, z.B. aus Elastomermaterial, umgeben ist. An dem Kern 241 ist die horizontale Achse 27 befestigt. Die ringförmige Dämpfungsschicht 242 ist von einem Mantel 243 umgeben, welcher die zylindrische Laufläche 244 bildet. Zu beiden Seiten der Laufläche 244 befindet sich ein radial überstehender Flansch 245, der bei diesem Ausführungsbeispiel dreieckförmigen Querschnitt hat und sich in radialer Richtung nach außen verjüngt. Durch die elastomere Dämpfungsschicht 242 werden die Schwingungen, die bei Abrollen des Mantels 243 auf der Bodenschiene 17 entstehen, gedämpft, bevor sie über die Achse 27 auf den Halter 26 und den Rahmen 11 übertragen werden. Auf diese Weise wird die Schallabstrahlung des Laufgeräusches verringert.

In den Fign. 8, 9 und 10 ist eine Verzweigungsstelle dargestellt, an der von einer gerade durchgehenden Schiene 17 ein Schienenstrang 17' abzweigt. An der Abzweigstelle weist die durchgehende Schiene 17 in der Oberseite des verdickten Kopfprofiles 171 einen Schlitz 172 mit bogenförmigem Verlauf auf. Der Schlitz 172 entspricht in seiner Breite, Tiefe und Form der Kontur eines Flansches 245 des Laufrades 24. Die Schlitztiefe ist kleiner als die Höhe des Kopfprofiles 171, so daß das Kopfprofil 171 durch den Schlitz 142 nur minimal unterbrochen ist. Der Schlitz 172 hat - ebenso wie der Flansch 145 - eine geringe Breite, so daß die obere Laufläche des Kopfprofiles 171 nur auf einer sehr kleinen Fläche unterbrochen ist. Durch den schrägen Verlauf des Schlitzes 172 entlang der Schiene 17 wird erreicht, daß die Laufläche 244 des Laufrades 24 beim Überfahren der Schienenabzweigung ständig in Kontakt mit der Oberseite des Kopfprofiles 171 bleibt.

An derjenigen Stelle, an der der Schienenstrang 171 gegen die Schiene 17 stößt, befindet sich in dem Kopfprofil 171 ein weiterer Schlitz 173, der an der Schiene 17 seitlich entlangläuft und bei Geradeausfahrt zur Aufnahme des rechten Flansches 245 dient. Der Schlitz 173 hat die gleiche V-förmige Kontur wie der Schlitz 172.

Wenn das Fahrzeug aus der in Fig. 8 gezeichten Stellung in den Schienenstrang 17' einfahren will, werden die linken Leitrollen 30 angehoben, während die rechten Leitrollen 30 in Höhe des Kopfprofiles 171 verbleiben. Die vordere rechte Leitrolle 30 wird von dem Kopfprofil des Schienenstranges 17' nach rechts gedrückt, so daß das Laufwerk 12 sich um die vertikale Achse 25 nach rechts verschwenkt. Bei der Weiterfahrt wird der linke Flansch 245 des Laufrades in den Schlitz 172 eingeführt und der rechte Flansch 245 legt sich seitlich gegen das Kopfprofil 171 des Schienenstranges 17'. Dadurch fährt das Laufwerk 12 auf den Schienenstrang 17.

Soll das Laufwerk aus der in Fig. 8 dargestellten Position geradeaus weiterfahren, dann werden die beiden rechten Leitrollen 30 angehoben, so daß sie nicht in Kontakt mit dem Schienenstrang 17 treten können. Die linken Leitrollen 30 bleiben in seitlichem Kontakt mit der Schiene 17. Der rechte Flansch 245 rollt durch den Schlitz 173 hindurch, so daß das Laufwerk 12 auf der Schiene geradeaus fährt.

Es wurde schon erwähnt, daß über der in Fig. 8 dargestellten Verzweigungsstelle an der Oberschiene 16 eine entsprechende Verzweigungsstelle angeordnet ist, wobei die Leitrollen 32 synchron zu den Leitrollen 30 gesteuert sind, so daß die obere Führung kongruent zu der unteren Führung verläuft.

Wie Fig. 3 zeigt, hat das Kopfprofil 171 der Bodenschiene 17 eine ebene obere Laufläche, die seitlich von Schrägflächen 173 begrenzt ist. Die Neigung der Schrägflächen 173 entspricht der Schräge der Innenflanken der Flansche 245, so daß das Laufrad 24 voll auf dem Kopfprofil 171 aufsitzt und von diesem ohne wesentliches seitliches Spiel geführt wird. Wenn die Tendenz besteht, daß das Laufrad 24 sich auf der Schiene 17 seitlich verschiebt, dann wird durch das Zusammenwirken der Schrägflächen 173 mit den Flanschen 245 und durch das Gewicht des Fahrzeugs das Laufrad 24 wieder fest auf die Schiene gedrückt.

## Patentansprüche

1. Schienengebundenes Fördersystem mit einer Bodenschiene (17), einer Oberschiene (16) und Fahrzeugen (10), die mit um vertikale Achsen schwenkbaren Laufwerken (12, 15) an den Schienen (17, 16) geführt sind, wobei jedes Laufwerk ein an der zugehörigen Schiene abrollendes Laufrad (24, 31) und seitlich vor dem Laufrad angeordnete höhen veränderliche Leitrollen (30, 32) aufweist, die so gesteuert sind, daß die Leitrollen auf jeweils einer Seite in Kontakt mit der Schiene bleiben, so daß an Abzweigungen und Weichen die Stellung der Leitrollen die Fahrtrichtung bestimmt, dadurch gekennzeichnet, daß die Bodenschiene (17) ein Kopfprofil (171) aufweist, an welchem seitliche Flansche (245) des Laufrades (24) angreifen, daß an Abzweigungen und Weichen in den divergierenden Strängen der Bodenschiene (17) im Kopfprofil (171) Schlitze (172, 173) vorgesehen sind, deren Weite bzw. Tiefe annähernd der Breite bzw. Höhe der Flansche (245) entspricht, und daß die Leitrollen (30) auf jeder Seite des Laufrades (24, 31) vertikal bewegbar sind, während beide Flansche (245) des Laufrades (24) ständig mit der Seitenfläche des Kopfprofils (171) zusammenwirken.

2. Fördersystem nach Anspruch 1, dadurch gekennzeichnet, daß die Flansche (245) eine sich nach außen verringernde Breite haben und die Schlitze (172,173) der Form der Flansche angepaßt sind.

3. Fördersystem nach Anspruch 2, dadurch gekennzeichnet, daß die Flansche (245) und Schlitze (172,173) V-förmig sind.

4. Fördersystem nach einem der Ansprüche 1 bis 3, dadurch gekennzeichnet, daß das Laufrad (24) zwischen einem inneren Kern (241) und einem äußeren Mantel (243) eine Dämpfungsschicht (242) aufweist.

5. Fördersystem nach einem der Ansprüche 1 bis 4, dadurch gekennzeichnet, daß die Leitrollen (30) vertikale Achsen haben und seitlich an dem Kopfprofil (171) angreifen.

## Claims

1. Track bound conveyor system comprising a ground rail (17), an upper rail (16) and vehicles (10) guided at the rails (17,16) by bogies (12,15) rotatable about vertical axles, each bogie being provided with a bogie wheel (24,31) running on the associated rail and with guide rollers (30,32) arranged laterally in advance of the bogie wheel and displaceable in height, the guide rollers being so controlled that on one corresponding side, they remain in contact with the rail so that at junctions and branch points, the travel direction is determined by the position of the guide rollers, characterized in that the ground rail (17) contains a head profile (171) engaged by lateral flanges (245) of the bogie wheel (24), and that at junctions and branch points in diverging tracks of the ground rail (17), the head profile (171) is provided with slots (172, 173) whose width or depth corresponds approximately to the width or height of the flanges (245), and that the guide rollers (30) are movable vertically on each side of the bogie wheel (24,31), while both flanges (245) of the bogie wheel (24) constantly cooperate with the lateral face of the head profile (171).

2. Conveyor system as defined in claim 1, characterized in that the width of the flanges (245) is decreasing to the outside and that the slots (172,173) are adapted to the shape of the flanges.

3. Conveyor system as defined in claim 2, characterized in that the flanges (245) and the slots (172,173) are V-shaped.

4. Conveyor system as defined in claim 2, characterized in that the bogie wheel (24) contains a damping layer (242) interposed between an inner core (241) and an outer jacket (243).

5. Conveyor system as defined in one of claims 1 to 4, characterized in that the guide rollers (30) have vertical axles laterally engaging the head profile (171).

## Revendications

1. Convoyeur sur rails comportant un rail au sol (17), un rail supérieur (16) et des chariots (10) qui sont guidés sur les rails (17, 16) avec des mécanismes de roulement (12, 15) pouvant pivoter autour d'axes verticaux, chaque mécanisme de roulement comportant une roue (24, 31) propre à rouler contre le rail associé, et des galets de guidage (30, 32), dont la position en hauteur peut être modifiée, disposés latéralement par rapport à la roue et qui sont commandés de telle sorte que lesdits galets de guidage restent en contact avec le rail selon les cas, d'un côté, afin que la position des galets de guidage corresponde à la direction de déplacement au niveau des bifurcations et des aiguillages, caractérisé par le fait que le rail de sol (17) présente un profil de tête (171) contre lequel s'appuient des flasques latéraux (245) de la roue (24), qu'au niveau des bifurcations et des aiguillages des rainures (172, 173) sont prévues dans le profil de tête (171) dans les cordons divergents du rail de sol (17), rainures dont la largeur et la profondeur correspondent sensiblement à la largeur et à la hauteur des flasques (245), et que les galets de guidage (30) sont montés mobiles verticalement de chaque côté de la roue (24, 31), tandis que les deux flasques (245) de la roue (24) coopèrent en permanence avec les surfaces latérales du profil de tête (171).

2. Convoyeur selon la revendication 1, caractérisé par le fait que les flasques (245) ont une largeur qui va en diminuant vers l'extérieur et que les rainures (172, 173) sont adaptées à la forme des flasques.

3. Convoyeur selon la revendication 2, caractérisé par le fait que les flasques (245) et les rainures (172, 173) ont une forme en V.

4. Convoyeur selon l'une des revendications 1 à 3, caractérisé par le fait que la roue (24) comporte une couche d'amortissement (242) entre un noyau interne (241) et une enveloppe extérieure (243).

5. Convoyeur selon l'une des revendications 1 à 4, caractérisé par le fait que les galets de guidage (30) ont des axes verticaux et viennent en appui latéralement contre le profil de tête (171).

FIG.1

FIG.2

# FIG.4

# FIG.6

# FIG.7

# FIG.3

# FIG.5

# FIG.8

# FIG.9

# FIG.10